(19) Europäisches Patentamt

European Patent Office

Office européen des brevets

(11) **EP 3 769 046 B1**

(12) **FASCICULE DE BREVET EUROPEEN**

(45) Date de publication et mention de la délivrance du brevet:
**31.08.2022 Bulletin 2022/35**

(21) Numéro de dépôt: **19712579.2**

(22) Date de dépôt: **21.03.2019**

(51) Classification Internationale des Brevets (IPC):
***G01D 5/20*** *(2006.01)*

(52) Classification Coopérative des Brevets (CPC):
**G01D 5/20; G01D 5/206**

(86) Numéro de dépôt international:
**PCT/EP2019/057169**

(87) Numéro de publication internationale:
**WO 2019/180182 (26.09.2019 Gazette 2019/39)**

(54) **PROCEDE DE MESURE D'UNE POSITION D'UN CORPS MOBILE PAR RAPPORT A UN CORPS FIXE**

VERFAHREN ZUR MESSUNG DER POSITION EINES BEWEGLICHEN KÖRPERS RELATIV ZU EINEM FESTEN KÖRPER

METHOD OF MEASURING A POSITION OF A MOVABLE BODY RELATIVE TO A FIXED BODY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.03.2018 FR 1852510**

(43) Date de publication de la demande:
**27.01.2021 Bulletin 2021/04**

(73) Titulaires:
• **Safran Landing Systems**
**78140 Vélizy-Villacoublay (FR)**
• **SAFRAN ELECTRONICS & DEFENSE**
**92100 Boulogne Billancourt (FR)**

(72) Inventeurs:
• **ZABULON, Joêl**
**78140 VELIZY-VILLACOUBLAY (FR)**
• **FRANK, David**
**78140 VELIZY-VILLACOUBLAY (FR)**
• **BICKARD, Thierry**
**92100 BOULOGNE-BILLANCOURT (FR)**

(74) Mandataire: **Lavaud, Thomas et al**
**Cabinet Boettcher**
**16, rue Médéric**
**75017 Paris (FR)**

(56) Documents cités:
WO-A1-2017/144638      DE-A1- 19 738 836
DE-B3-102016 202 859      DE-B3-102016 202 871

**Description**

L'invention concerne le domaine des procédés de mesure d'une position d'un corps mobile par rapport à un corps fixe.

ARRIERE PLAN DE L'INVENTION

Un système de freinage moderne de roues d'atterrisseur d'aéronef met classiquement en œuvre une fonction d'antipatinage des roues sur lesquelles le freinage est appliqué (on parle de « roues freinées »).

La fonction d'antipatinage vise à détecter un début de blocage des roues freinées et à adapter le freinage pour éviter ce blocage.

Le système de freinage comporte, pour chaque roue freinée, un tachymètre qui produit une mesure de vitesse de rotation « instantanée » de la roue freinée. La mesure de vitesse de rotation est utilisée pour détecter un début de blocage de ladite roue freinée.

Un tachymètre traditionnel de roue freinée d'aéronef comprend un capteur passif, par exemple un capteur à reluctance variable. Le capteur passif comporte ainsi une bobine aux bornes de laquelle est induite une tension de mesure représentative de la vitesse de rotation de la roue.

Pour améliorer la précision et la sensibilité à basse vitesse de la mesure de vitesse de rotation, on tente de concevoir de tels tachymètres en utilisant des technologies issues du domaine des codeurs. Les codeurs sont en effet massivement répandus dans l'industrie pour mesurer la vitesse de rotation de corps tournants.

Ces codeurs produisent une position angulaire (on parle alors de codeurs absolus) sur un bus numérique, ou génèrent des « tops » à intervalles réguliers (on parle alors de codeurs incrémentaux). Les capteurs utilisés pour réaliser ces codeurs sont principalement des capteurs optiques ou des capteurs magnétiques (et notamment des capteurs à effet Hall).

La technologie optique a pour principal inconvénient d'être sensible aux salissures et n'est donc pas adaptée à une utilisation dans l'environnement d'une roue freinée d'aéronef, où de la poussière de carbone provenant de l'usure du frein est présente en grande quantité. D'autre part, les importantes fluctuations de température liées à l'élévation de la température du frein à l'atterrissage et à l'abaissement de la température du frein pendant le vol créent des cycles de dilatations et de contractions des matériaux qui nuisent à l'efficacité des joints d'étanchéité et qui, dans le temps, dégradent les performances des capteurs.

Ainsi, on privilégie généralement la technologie magnétique dans un tel environnement.

Les capteurs à effet Hall sont eux aussi plus sensibles à l'environnement que les capteurs passifs. En particulier, leur fonction de transfert est modifiée par la température et présente une grande sensibilité aux conditions de fabrication. De plus, le principe de la mesure par effet Hall requiert la présence d'aimants possédant des caractéristiques précises et stables dans le temps. Les fonctions de calibration et de compensation que nécessite l'utilisation de ces capteurs complexifient et augmentent le coût de cette technologie. Le document DE 10 2016 202871 B3 divulgue une mesure à partir d'un couplage inductif.

OBJET DE L'INVENTION

L'invention est définie par les revendications et elle a pour objet d'améliorer la fiabilité et la stabilité dans le temps, et de réduire la complexité et le coût de la mesure d'une position d'un corps mobile par rapport à un corps fixe, ladite mesure de position pouvant être utilisée pour estimer la vitesse de rotation d'une roue d'un véhicule tel qu'un aéronef.

RESUME DE L'INVENTION

En vue de la réalisation de ce but, on propose un procédé de mesure d'une position d'un corps mobile par rapport à un corps fixe, le procédé de mesure utilisant un dispositif de mesure comportant une partie fixe destinée à être solidarisée au corps fixe et une partie mobile destinée à être solidarisée au corps mobile, la partie fixe comprenant un premier circuit imprimé sur lequel sont formées des premières pistes définissant au moins un motif d'émission et une pluralité de motifs de mesure, la partie mobile comprenant un deuxième circuit imprimé sur lequel sont formées des deuxièmes pistes définissant au moins un motif de réception et au moins un motif cible, le premier circuit imprimé et le deuxième circuit imprimé étant couplés électromagnétiquement de sorte que, lorsque le motif d'émission est excité par un signal d'excitation, un signal induit est reçu par le motif de réception puis est réémis par le motif cible, les motifs de mesure captant alors des signaux de mesure représentatifs d'une position du motif cible, et donc du deuxième circuit imprimé, de la partie mobile et du corps mobile , le procédé de mesure comprenant les étapes de :

- déterminer un premier motif de mesure qui est le motif de mesure le plus proche du motif cible, le premier motif de mesure captant un premier signal de mesure qui présente une amplitude maximale parmi tous les signaux de mesure ;
- déterminer un deuxième motif de mesure qui est le motif de mesure le plus proche du motif cible à l'exception du premier motif de mesure, le deuxième motif de mesure captant un deuxième signal de mesure ;
- définir la position du motif cible en fonction de la position du premier motif de mesure ou du deuxième motif de mesure, du premier signal de mesure et du deuxième signal de mesure.

L'utilisation du premier circuit imprimé et du deuxième circuit imprimé couplés électromagnétiquement constitue une solution simple à réaliser, peu coûteuse, et présentant une grande stabilité dans le temps. De plus, grâce à une grande reproductibilité de fabrication, cette solution n'exige pas d'opération de calibration.

On propose de plus un procédé de mesure tel que celui qui vient d'être décrit, comprenant en outre l'étape préliminaire de stocker dans une table en mémoire des valeurs de position du motif cible et, pour chaque valeur de position, une valeur représentative d'une différence entre l'amplitude du premier signal de mesure et l'amplitude du deuxième signal de mesure.

On propose de plus un procédé de mesure tel que celui qui vient d'être décrit, dans lequel le corps mobile est un corps tournant autour d'un axe de rotation, et dans lequel la position du corps mobile est une position angulaire.

On propose de plus un procédé de mesure tel que celui qui vient d'être décrit, dans lequel le motif d'émission et le motif de réception présentent chacun un axe de révolution confondu avec l'axe de rotation du corps mobile.

On propose de plus un procédé de mesure tel que celui qui vient d'être décrit, dans lequel le motif d'émission s'étend à proximité d'une circonférence du premier circuit imprimé, et dans lequel le motif de réception s'étend à proximité d'une circonférence du deuxième circuit imprimé.

On propose de plus un procédé de mesure tel que celui qui vient d'être décrit, dans lequel le motif d'émission s'étend au centre du premier circuit imprimé, et dans lequel le motif de réception s'étend au centre du deuxième circuit imprimé.

On propose aussi un procédé de mesure tel que celui qui vient d'être décrit, les motifs de mesure étant répartis angulairement de manière régulière à proximité d'une circonférence du premier circuit imprimé, et le motif cible étant positionné à proximité d'une circonférence du deuxième circuit imprimé.

On propose de plus un procédé de mesure tel que celui qui vient d'être décrit, le dispositif de mesure étant en outre agencé pour mesurer une vitesse du corps mobile.

On propose en outre un procédé de mesure tel que celui qui vient d'être décrit, dans lequel au moins un motif parmi le motif d'émission, les motifs de mesure, le motif de réception et le motif cible est une bobine.

On propose de plus un procédé de mesure tel que celui qui vient d'être décrit, le corps mobile étant une roue d'un véhicule montée sur un essieu pour tourner autour d'un axe de rotation, la partie fixe étant destinée à être solidarisée à l'essieu et la partie mobile étant destinée à être entraînée en rotation par la roue.

On propose en outre un procédé de mesure tel que celui qui vient d'être décrit, le dispositif de mesure étant intégré dans un tachymètre.

On propose de plus un procédé de mesure tel que celui qui vient d'être décrit, le tachymètre étant agencé pour mesurer une vitesse de rotation d'une roue d'un atterrisseur d'aéronef.

D'autres caractéristiques et avantages de l'invention ressortiront à la lecture de la description qui suit de modes de réalisation particuliers non limitatifs de l'invention.

BREVE DESCRIPTION DES DESSINS

Il sera fait référence aux dessins annexés, parmi lesquels :

- la figure 1 représente une roue freinée d'un atterrisseur d'un aéronef et un dispositif de mesure selon un premier mode de réalisation ;
- la figure 2 représente un premier circuit imprimé et un deuxième circuit imprimé du dispositif de mesure selon le premier mode de réalisation ;
- la figure 3 représente des premières pistes du premier circuit imprimé superposées avec des deuxièmes pistes du deuxième circuit imprimé ;
- la figure 4 représente un graphique contenant des courbes représentant des signaux de mesure captés par des motifs de mesure du dispositif de mesure selon le premier mode de réalisation ;
- la figure 5 représente un graphique contenant une courbe d'une différence entre une amplitude d'un premier signal de mesure et une amplitude d'un deuxième signal de mesure ;
- la figure 6 représente le premier circuit imprimé et le deuxième circuit imprimé d'un dispositif de mesure selon un deuxième mode de réalisation.

3

DESCRIPTION DETAILLEE DE L'INVENTION

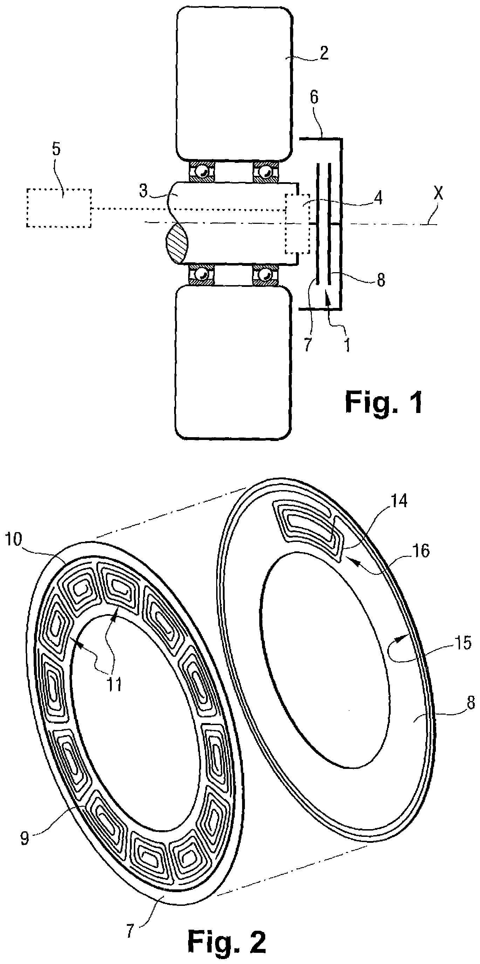

En référence à la figure 1, le dispositif de mesure selon un premier mode de réalisation 1 est intégré dans un tachymètre d'une roue freinée 2 d'un atterrisseur d'un aéronef. La roue freinée 2 est montée sur un essieu 3 de l'atterrisseur pour tourner autour d'un axe de rotation X, qui est aussi un axe de l'essieu 3.

Le dispositif de mesure 1 est destiné à mesurer une position angulaire et une vitesse de rotation de la roue freinée 2. Outre le dispositif de mesure 1, le tachymètre comporte une unité de traitement électronique 4 reliée au système de freinage 5.

Le dispositif de mesure 1 comporte une partie fixe destinée à être solidarisée à l'essieu 3 et une partie mobile destinée à être entraînée en rotation par la roue freinée 2.

La partie fixe et l'unité de traitement électronique 4 sont positionnées à une extrémité de l'essieu 3. La partie mobile est fixée et intégrée dans un capot de roue 6 qui s'étend, par rapport à la roue freinée 2, d'un côté opposé à celui du frein. Le capot de roue 6 est solidaire en rotation de la roue freinée 2 et est destiné à protéger l'intérieur de l'essieu 3.

La partie fixe du dispositif de mesure 1 comprend un premier circuit imprimé 7, et la partie mobile du dispositif de mesure 1 comprend un deuxième circuit imprimé 8. Le premier circuit imprimé 7 et le deuxième circuit imprimé 8 sont positionnés parallèlement et en face l'un de l'autre, et sont éloignés d'une distance comprise typiquement entre 0,5 et 10 mm.

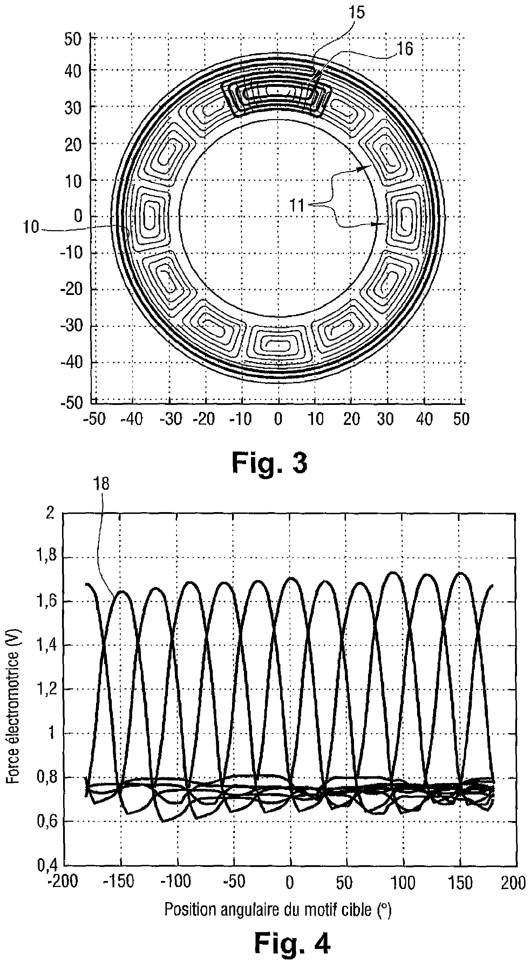

En référence aux figures 2 et 3, le premier circuit imprimé 7 et le deuxième circuit imprimé 8 présentent ici tous deux une forme annulaire.

Des premières pistes 9 en cuivre sont formées sur le premier circuit imprimé 7. Les premières pistes 9 sont ici gravées sur le premier circuit imprimé 7. Les premières pistes 9 définissent un motif d'émission 10 et une pluralité de motifs de mesure 11, en l'occurrence douze motifs de mesure 11.

Le motif d'émission 10 s'étend à proximité d'une circonférence du premier circuit imprimé 7, et les motifs de mesure 11 sont répartis angulairement de manière régulière à proximité de la circonférence du premier circuit imprimé 7.

Le motif d'émission 10 présente un axe de révolution. Lorsque le tachymètre est installé sur l'atterrisseur, l'axe de révolution est confondu avec l'axe de rotation X de la roue, c'est à dire avec l'axe de l'essieu 3. Le motif d'émission 10 est ici une bobine comprenant plusieurs spires formées par une première piste 9 sur le premier circuit imprimé 7. Les spires forment chacune un cercle de diamètre proche du grand diamètre du premier circuit imprimé 7.

Chaque motif de mesure 11 est ici une bobine comprenant plusieurs spires formées par une première piste 9 sur le premier circuit imprimé 7.

L'unité de traitement électronique 4 est reliée au motif d'émission 10 et aux motifs de mesure 11.

Des deuxièmes pistes en cuivre 14 sont formées sur le deuxième circuit imprimé 8. Les deuxièmes pistes 14 sont ici gravées sur le deuxième circuit imprimé 8. Les deuxièmes pistes 14 définissent un motif de réception 15 et un motif cible 16.

Le motif de réception 15 s'étend à proximité d'une circonférence du deuxième circuit imprimé 8, et le motif cible 16 est positionné à proximité de la circonférence du deuxième circuit imprimé 8. Le motif de réception 15 et le motif cible 16 sont reliés par des deuxièmes pistes 14.

Le motif de réception 15 présente un axe de révolution confondu avec l'axe de rotation X de la roue, c'est à dire avec l'axe de l'essieu 3. Le motif de réception 15 est ici une bobine comprenant plusieurs spires formées par une deuxième piste 14 sur le deuxième circuit imprimé 8.

Les spires forment chacune un cercle de diamètre proche du grand diamètre du deuxième circuit imprimé 8.

Le motif cible 16 est ici une bobine comprenant plusieurs spires formées par une deuxième piste 14 sur le deuxième circuit imprimé 8.

L'unité de traitement électronique 4 génère un signal d'excitation et excite le motif d'émission 10 avec le signal d'excitation. Le signal d'excitation est un signal électrique alternatif à haute fréquence. Le premier circuit imprimé 7 et le deuxième circuit imprimé 8 sont couplés électromagnétiquement de sorte que, lorsque le motif d'émission 10 est excité par le signal d'excitation, un signal induit est reçu par le motif de réception 15. Le couplage électromagnétique est en l'occurrence un couplage inductif.

Le signal induit comporte un courant I(t) circulant dans le motif de réception 15 et dans le motif cible 16 du deuxième circuit imprimé 8.

L'excitation du motif cible 16 par le courant I(t) produit un champ magnétique B(t) en un point M de l'espace (loi de Biot et Savart) :

$$\overrightarrow{B(t)} = \frac{\mu_0}{4\pi} \int_P I(t).\,d\vec{l} \wedge \frac{\overrightarrow{PM}}{PM^3} = \frac{\mu_0}{4\pi} I(t) \int_P d\vec{l} \wedge \frac{\overrightarrow{PM}}{PM^3}$$

Ce champ magnétique B(t) génère l'apparition d'une force électromotrice dans chaque bobine des motifs de mesure 11 du premier circuit imprimé 7 (loi de Lenz-Faraday). La force électromotrice apparaissant sur chaque bobine des motifs de mesure 11 est fonction du flux magnétique $\phi(t)$ qui traverse la bobine :

$$e = -\frac{d\phi}{dt}$$

Le flux magnétique à travers chaque bobine est :

$$\phi(t) = \iint_S \vec{B}(t).d\vec{S} = \frac{\mu_0}{4\pi}I(t).\iint_S \int_P (d\vec{l} \wedge \frac{\overrightarrow{PM}}{PM^{3)}}).d\vec{S},$$

où $\vec{S}$ est le vecteur surface normal à la bobine.

En considérant le système comme quasi-stationnaire, on peut calculer, pour une bobine d'un motif de mesure 11 particulier, un ensemble de k valeurs correspondant à k positions différentes du motif cible 16 :

$$L_k = \frac{\mu_0}{4\pi}.\iint_S \int_P (d\vec{l} \wedge \frac{\overrightarrow{PM}}{PM^{3)}}).d\vec{S}$$

Ces termes $L_k$ représentent l'inductance mutuelle entre la bobine du motif cible 16 et la bobine du motif de mesure 11 selon les positions du motif cible 16.

La force électromotrice résultante est donc :

$$e(t) = -L_k.\frac{dI(t)}{dt}.$$

$I(t)$ et e(t) sont des grandeurs électrique sinusoïdales à la fréquence $f=\omega/2\Pi$. La force électromotrice mesurée sur chaque bobine d'un motif de mesure 11 est donc :

$$e = -jL_k.\omega I.$$

Ainsi, pour une valeur de courant donnée et à une fréquence donnée, e est fonction de la position relative du motif cible 16 par rapport au motif de mesure 11.

L'unité de traitement électronique 4 acquiert les signaux de mesure associés à tous les motifs de mesure 11. Chaque signal de mesure est une force électromotrice.

On voit sur la figure 4 que la force électromotrice mesurée pour un motif de mesure 11 donné dépend de la position angulaire du motif cible 16 et donc du deuxième circuit imprimé 8 par rapport audit motif de mesure 11 donné. Ainsi, on observe par exemple que la courbe 18 de la force électromotrice mesurée pour un motif de mesure 11 positionné à -150° est croissante lorsque la position angulaire du motif cible 16 se rapproche de -150°, atteint un maximum lorsque la position angulaire du motif cible 16 atteint -150°, puis décroît lorsque la position angulaire du motif cible 16 s'éloigne de -150°.

Suite à l'acquisition des signaux de mesure, l'unité de traitement électronique 4 mesure les amplitudes des signaux de mesure et détermine, parmi les signaux de mesure, un premier signal de mesure capté par un premier motif de mesure 11. Le premier motif de mesure est le motif de mesure le plus proche du motif cible 16, et le premier signal de mesure est, parmi tous les signaux de mesure, le signal de mesure qui présente une amplitude maximale.

La détermination du premier motif de mesure et la connaissance de la position angulaire dudit premier motif de mesure permettent de définir la position angulaire du motif cible 16 à $2\Pi/N$ près, où N est le nombre de motifs de mesure 11 (ici, N=12). La position angulaire de chaque motif de mesure 11 peut donc être estimée par la formule 2k. $\Pi/N$, k étant un indice associé audit motif de mesure 11.

Pour améliorer la précision de la mesure de la position angulaire du motif cible 16 (et donc du deuxième circuit imprimé 8 et de la roue freinée 2), on réalise tout d'abord une étape de calibration. L'étape de calibration est mise en œuvre par exemple en laboratoire ou sur la chaîne de fabrication du tachymètre ou bien directement sur l'aéronef suite à l'installation du tachymètre.

Cette étape de calibration consiste à faire varier la position angulaire du motif cible 16 et à mesurer, pour chaque position angulaire du motif cible 16, l'amplitude du premier signal de mesure (capté par le premier motif de mesure), et les amplitudes des signaux de mesure des motifs de mesure adjacents au premier motif de mesure (c'est-à-dire situés directement à gauche et directement à droite du premier motif de mesure).

Puis, l'étape de calibration consiste à déterminer, parmi les motifs de mesure adjacents, le deuxième motif de mesure qui est le motif de mesure le plus proche du motif cible 16, à l'exception du premier motif de mesure. Le motif cible 16 est donc positionné entre le premier motif de mesure et le deuxième motif de mesure.

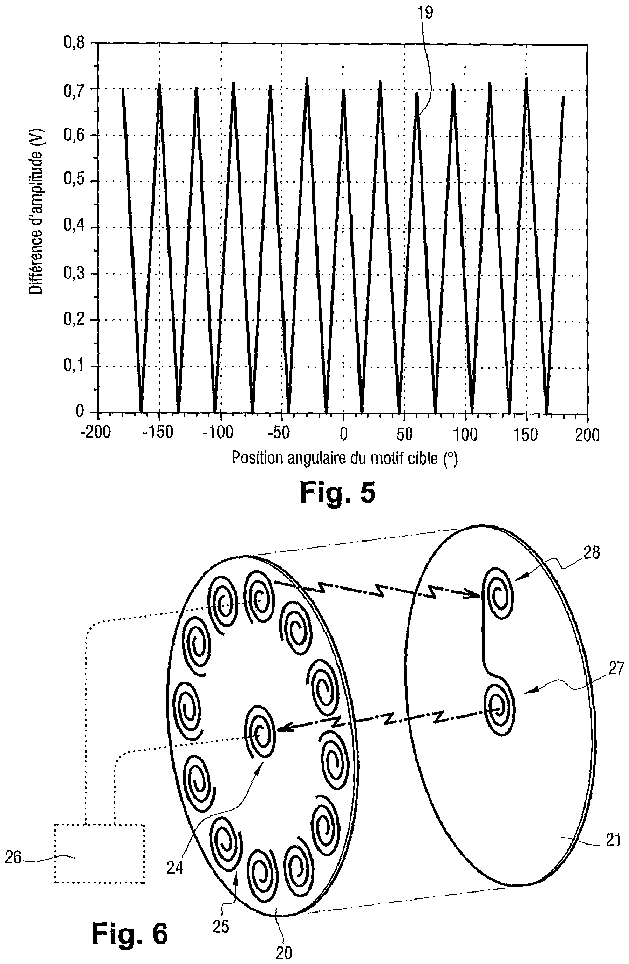

En référence à la figure 5, l'étape de calibration consiste de plus, pour chaque position angulaire du motif cible 16, à mesurer une différence 19 entre l'amplitude du premier signal de mesure et l'amplitude du deuxième signal de mesure capté par le deuxième motif de mesure (ou bien une valeur représentative de cette différence). On obtient ainsi 2*N (ici 24) portions de courbes monotones.

Les positions angulaires et les valeurs mesurées associées sont ensuite stockées dans une table elle-même stockée dans une mémoire de l'unité de traitement électronique 4.

En opération, la mesure de la position angulaire du motif cible 16 est réalisée de la manière suivante.

L'unité de traitement électronique 4 acquiert les signaux de mesure et détermine, parmi les signaux de mesure, le premier signal de mesure capté par le premier motif de mesure et présentant une amplitude maximale. La position du premier motif de mesure fournit donc une première estimation a priori assez peu précise du motif cible 16.

L'unité de traitement électronique 4 compare les signaux de mesure associés aux motifs de mesure adjacents, c'est-à-dire au motif de mesure positionné directement à gauche et au motif de mesure positionné directement à droite du premier motif de mesure.

Si l'amplitude du signal de mesure du motif de mesure positionné à gauche est supérieure à l'amplitude du signal de mesure du motif de mesure positionné à droite, le deuxième motif de mesure est le motif de mesure positionné à gauche.

Si l'amplitude du signal de mesure du motif de mesure positionné à droite est supérieure à l'amplitude du signal de mesure du motif de mesure positionné à gauche, le deuxième motif de mesure est le motif de mesure positionné à droite.

Si l'amplitude du signal de mesure du motif de mesure positionné à droite est égale à l'amplitude du signal de mesure du motif de mesure positionné à gauche, on ne définit pas de deuxième motif de mesure.

Ensuite, si l'amplitude du signal de mesure du motif de mesure positionné à droite est égale à l'amplitude du signal de mesure du motif de mesure positionné à gauche, l'unité de traitement électronique 4 détermine que la position angulaire précise du motif cible 16 est égale à celle du premier motif de mesure (c'est à dire à $2k_0.\Pi/N$, $k_0$ étant l'indice associé au motif de mesure optimal).

Sinon, l'unité de traitement électronique 4 évalue la différence entre l'amplitude du premier signal de mesure (associé au premier motif de mesure) et l'amplitude du deuxième signal de mesure (associé au deuxième motif de mesure), et acquiert dans la table en mémoire la position angulaire précise du motif cible 16 qui correspond à cette différence. On obtient donc la position angulaire précise du motif cible en fonction de la position angulaire du premier motif de mesure (celle du deuxième motif de mesure pourrait aussi être utilisée) et de la différence entre l'amplitude du premier signal de mesure et l'amplitude du deuxième signal de mesure.

L'unité de traitement électronique 4 utilise alors la position angulaire précise du motif cible 16 pour déterminer la position angulaire du deuxième circuit imprimé 8, la position angulaire de la roue freinée 2 et la vitesse de rotation de la roue freinée 2.

En référence à la figure 6, on décrit maintenant le premier circuit imprimé 20 et le deuxième circuit imprimé 21 d'un dispositif de mesure selon un deuxième mode de réalisation 22.

Le premier circuit imprimé 20 et le deuxième circuit imprimé 21 présentent ici tous deux la forme d'un disque.

Les premières pistes définissent un motif d'émission 24 et une pluralité de motifs de mesure 25, en l'occurrence douze motifs de mesure 25.

Le motif d'émission 24 s'étend au centre du premier circuit imprimé 20, et les motifs de mesure 25 sont répartis angulairement de manière régulière à proximité d'une circonférence du premier circuit imprimé 20.

Le motif d'émission 24 présente un axe de révolution confondu avec l'axe de rotation de la roue, c'est à dire avec l'axe de l'essieu. Le motif d'émission 24 est ici une bobine comprenant plusieurs spires formées par une première piste sur le premier circuit imprimé 20.

Chaque motif de mesure 25 est ici une bobine comprenant plusieurs spires formées par une première piste sur le premier circuit imprimé 20.

L'unité de traitement électronique 26 est reliée au motif d'émission 24 et aux motifs de mesure 25.

Les deuxièmes pistes définissent un motif de réception 27 et un motif cible 28.

Le motif de réception 27 s'étend au centre du deuxième circuit imprimé 21, et le motif cible 28 est positionné à proximité de la circonférence du deuxième circuit imprimé 21. Le motif de réception 27 et le motif cible 28 sont reliés par une deuxième piste.

Le motif de réception 27 présente un axe de révolution confondu avec l'axe de rotation de la roue, c'est à dire avec l'axe de l'essieu. Le motif de réception 27 est ici une bobine comprenant plusieurs spires formées par une deuxième piste sur le deuxième circuit imprimé 21.

Le motif cible 28 est ici une bobine comprenant plusieurs spires formées par une deuxième piste sur le deuxième circuit imprimé 21.

Bien entendu, l'invention n'est pas limitée aux modes de réalisation décrits mais englobe toute variante entrant dans le champ de l'invention telle que définie par les revendications.

On a décrit ici que le dispositif de mesure est utilisé pour mesurer une position angulaire et une vitesse de rotation d'une roue freinée d'un atterrisseur d'aéronef. Le dispositif de mesure peut bien sûr être utilisé pour mesurer une position angulaire et/ou une vitesse de rotation d'une roue d'un autre type de véhicule, et même de tout type de corps tournant par rapport à un corps fixe dans tout type d'application (de tout domaine technique).

Plus généralement, le dispositif de mesure peut être utilisé pour mesurer tout type de position, de déplacement, de vitesse, de tout corps mobile par rapport à un corps fixe. Le dispositif de mesure peut ainsi parfaitement être utilisé pour mesurer une position et/ou une vitesse linéaires.

Le nombre, la position et la forme des motifs peuvent être différents de ceux décrits ici. On note en particulier que les motifs ne sont pas nécessairement des bobines, mais pourraient par exemple être des antennes planes de forme diverse. Dans ce cas, le couplage entre les motifs du premier circuit imprimé et du deuxième circuit imprimé est un couplage capacitif plutôt qu'un couplage inductif. La fréquence du signal d'excitation est adaptée aux motifs utilisés.

**Revendications**

1. Procédé de mesure d'une position d'un corps mobile par rapport à un corps fixe, le procédé de mesure utilisant un dispositif de mesure comportant une partie fixe destinée à être solidarisée au corps fixe et une partie mobile destinée à être solidarisée au corps mobile, la partie fixe comprenant un premier circuit imprimé (7 ; 20) sur lequel sont formées des premières pistes (9) définissant au moins un motif d'émission (10 ; 24) et une pluralité de motifs de mesure (11 ; 25), la partie mobile comprenant un deuxième circuit imprimé (8 ; 21) sur lequel sont formées des deuxièmes pistes (14) définissant au moins un motif de réception (15 ; 27) et au moins un motif cible (16 ; 28), le premier circuit imprimé et le deuxième circuit imprimé étant couplés électromagnétiquement de sorte que, lorsque le motif d'émission est excité par un signal d'excitation, un signal induit est reçu par le motif de réception puis est réémis par le motif cible, les motifs de mesure captant alors des signaux de mesure représentatifs d'une position du motif cible, et donc du deuxième circuit imprimé, de la partie mobile et du corps mobile , le procédé de mesure comprenant les étapes de :

   - déterminer un premier motif de mesure qui est le motif de mesure le plus proche du motif cible, le premier motif de mesure captant un premier signal de mesure qui présente une amplitude maximale parmi tous les signaux de mesure ;
   - déterminer un deuxième motif de mesure qui est le motif de mesure le plus proche du motif cible à l'exception du premier motif de mesure, le deuxième motif de mesure captant un deuxième signal de mesure ;
   - définir la position du motif cible en fonction de la position du premier motif de mesure ou du deuxième motif de mesure, du premier signal de mesure et du deuxième signal de mesure.

2. Procédé de mesure selon la revendication 1, comprenant en outre l'étape préliminaire de stocker dans une table en mémoire des valeurs de position du motif cible et, pour chaque valeur de position, une valeur représentative d'une différence entre l'amplitude du premier signal de mesure et l'amplitude du deuxième signal de mesure.

3. Procédé de mesure selon l'une des revendications précédentes, dans lequel le corps mobile (2) est un corps tournant autour d'un axe de rotation (X), et dans lequel la position du corps mobile est une position angulaire.

4. Procédé de mesure selon la revendication 3, dans lequel le motif d'émission et le motif de réception présentent chacun un axe de révolution confondu avec l'axe de rotation du corps mobile.

5. Procédé de mesure selon la revendication 3, dans lequel le motif d'émission (10) s'étend à proximité d'une circonférence du premier circuit imprimé (7), et dans lequel le motif de réception (15) s'étend à proximité d'une circonférence du deuxième circuit imprimé (8) .

6. Procédé de mesure selon la revendication 3, dans lequel le motif d'émission (24) s'étend au centre du premier circuit imprimé (20), et dans lequel le motif de réception (27) s'étend au centre du deuxième circuit imprimé (21).

7. Procédé de mesure selon la revendication 3, les motifs de mesure (11 ; 25) étant répartis angulairement de manière régulière à proximité d'une circonférence du premier circuit imprimé, et le motif cible (16 ; 28) étant positionné à proximité d'une circonférence du deuxième circuit imprimé.

8. Procédé de mesure selon l'une des revendications précédentes, le dispositif de mesure étant en outre agencé pour mesurer une vitesse du corps mobile.

9. Procédé de mesure selon l'une des revendications précédentes, dans lequel au moins un motif parmi le motif d'émission, les motifs de mesure, le motif de réception et le motif cible est une bobine.

10. Procédé de mesure selon l'une des revendications précédentes, le corps mobile étant une roue (2) d'un véhicule montée sur un essieu (3) pour tourner autour d'un axe de rotation, la partie fixe étant destinée à être solidarisée à l'essieu et la partie mobile étant destinée à être entraînée en rotation par la roue.

11. Procédé de mesure selon l'une des revendications précédentes, le dispositif de mesure étant intégré dans un tachymètre.

12. Procédé de mesure selon la revendication 11, le tachymètre étant agencé pour mesurer une vitesse de rotation d'une roue (2) d'un atterrisseur d'aéronef.


**Patentansprüche**

1. Messverfahren zum Messen einer Position eines beweglichen Körpers in Bezug auf einen ortsfesten Körper, wobei das Messverfahren eine Messvorrichtung einsetzt, die einen ortsfesten Teil umfasst, der dazu bestimmt ist, fest mit dem ortsfesten Körper verbunden zu werden, sowie einen beweglichen Teil, der dazu bestimmt ist, fest mit dem beweglichen Körper verbunden zu werden, wobei der ortsfeste Teil eine erste gedruckte Schaltung (7; 20) umfasst, auf der erste Bahnen (9) ausgebildet sind, die mindestens ein Sendemuster (10; 24) und eine Vielzahl von Messmustern (11; 25) definieren, wobei der bewegliche Teil eine zweite gedruckte Schaltung (8; 21) umfasst, auf der zweite Bahnen (14) ausgebildet sind, die mindestens ein Empfangsmuster (15; 27) und mindestens ein Zielmuster (16; 28) definieren, wobei die erste gedruckte Schaltung und die zweite gedruckte Schaltung derart elektromagnetisch gekoppelt sind, dass, wenn das Sendemuster durch ein Anregungssignal angeregt wird, ein induziertes Signal von dem Empfangsmuster empfangen und dann durch das Zielmuster erneut gesendet wird, wobei die Messmuster dann Messignale auffangen, die repräsentativ für eine Position des Zielmusters und folglich der zweiten gedruckten Schaltung, des beweglichen Teils und des beweglichen Körpers sind, wobei das Messverfahren die Schritte umfasst:

   - Bestimmen eines ersten Messmusters, welches das Messmuster ist, das dem Zielmuster am nächsten ist, wobei das erste Messmuster ein erstes Messsignal auffängt, das eine maximale Amplitude unter allen Messsignalen aufweist;
   - Bestimmen eines zweiten Messmusters, welches das Messmuster ist, das abgesehen von dem ersten Messmuster dem Zielmuster am nächsten ist, wobei das zweite Messmuster ein zweites Messsignal auffängt;
   - Definieren der Position des Zielmusters in Abhängigkeit von der Position des ersten Messmusters oder des zweiten Messmusters, des ersten Messsignals und des zweiten Messsignals.

2. Messverfahren nach Anspruch 1, ferner umfassend den vorbereitenden Schritt des Speicherns von Positionswerten des Zielmusters in einer Tabelle im Speicher und eines Werts, der repräsentativ für eine Differenz zwischen der Amplitude des ersten Messsignals und der Amplitude des zweiten Messsignals ist, für jeden Positionswert.

3. Messverfahren nach einem der vorhergehenden Ansprüche, bei dem der bewegliche Körper (2) ein Körper ist, der sich um eine Rotationsachse (X) dreht, und bei dem die Position des beweglichen Körpers eine Winkelposition ist.

4. Messverfahren nach Anspruch 3, bei dem das Sendemuster und das Empfangsmuster jeweils eine Umdrehungsachse aufweisen, die mit der Rotationsachse des beweglichen Körpers zusammenfällt.

5. Messverfahren nach Anspruch 3, bei dem sich das Sendemuster (10) in der Nähe eines Umfangs der ersten gedruckten Schaltung (7) erstreckt, und bei dem sich das Empfangsmuster (15) in der Nähe eines Umfangs der zweiten gedruckten Schaltung (8) erstreckt.

6. Messverfahren nach Anspruch 3, bei dem sich das Sendemuster (24) in der Mitte der ersten gedruckten Schaltung (20) erstreckt, und bei dem sich das Empfangsmuster (27) in der Mitte der zweiten gedruckten Schaltung (21) erstreckt.

7. Messverfahren nach Anspruch 3, wobei die Messmuster (11; 25) winkelförmig auf gleichmäßige Weise in der Nähe eines Umfangs der ersten gedruckten Schaltung verteilt sind, und das Zielmuster (16; 28) in der Nähe eines Umfangs der zweiten gedruckten Schaltung positioniert ist.

8. Messverfahren nach einem der vorhergehenden Ansprüche, bei dem die Messvorrichtung ferner ausgebildet ist, um eine Geschwindigkeit des beweglichen Körpers zu messen.

9. Messverfahren nach einem der vorhergehenden Ansprüche, bei dem mindestens ein Muster unter dem Sendemuster, den Messmustern, dem Empfangsmuster und dem Zielmuster eine Spule ist.

10. Messverfahren nach einem der vorhergehenden Ansprüche, bei dem der bewegliche Körper ein Fahrzeugrad (2) ist, das auf einer Achse (3) gelagert ist, um sich um eine Rotationsachse zu drehen, wobei der ortsfeste Teil dazu bestimmt ist, fest mit der Achse verbunden zu werden, und der bewegliche Teil dazu bestimmt ist, von dem Rad in Drehung angetrieben zu werden.

11. Messverfahren nach einem der vorhergehenden Ansprüche, bei dem die Messvorrichtung in einem Tachometer integriert ist.

12. Messverfahren nach Anspruch 11, bei dem der Tachometer ausgebildet ist, um eine Drehgeschwindigkeit eines Rades (2) eines Luftfahrzeugfahrwerks zu messen.

**Claims**

1. A measurement method for measuring the position of a movable body that is movable relative to a fixed body, the measurement method making use of a measurement device comprising a fixed portion for securing to the fixed body and a movable portion for securing to the movable body, the fixed portion including a first printed circuit (7; 20) having formed thereon first tracks (9) defining at least one emission pattern (10; 24) and also a plurality of measurement patterns (11; 25), the movable portion including a second printed circuit (8; 21) having formed thereon second tracks (14) defining at least one reception pattern (15; 27) and also at least one target pattern (16; 28), the first and second printed circuits being coupled together electromagnetically in such a manner that, when the emission pattern is excited by an excitation signal, an induced signal is received by the reception pattern and is then re-emitted by the target pattern, the measurement patterns then picking up measurement signals that are representative of the position of the target pattern, and thus also of the second printed circuit, of the movable portion, and of the movable body, the measurement method comprising the steps of:

• determining a first measurement pattern that is the measurement pattern closest to the target pattern, the first measurement pattern picking up a first measurement signal that presents the greatest amplitude from among all the measurement signals;
• determining a second measurement pattern that is the measurement pattern that is the next closest to the target pattern after the first measurement pattern, the second measurement pattern picking up a second measurement signal; and
• defining the position of the target pattern as a function of the position of the first measurement pattern or of the second measurement pattern, and as a function of the first measurement signal and of the second measurement signal.

2. A measurement method according to claim 1, further comprising the preliminary step of storing position values for the target pattern in a table in memory, each position value being associated with a value representative of the difference between the amplitude of the first measurement signal and the amplitude of the second measurement signal.

3. A measurement method according to any preceding claim, wherein the movable body (2) is a body rotatable about an axis of rotation (X), and wherein the position of the movable body is an angular position.

4. A measurement method according to claim 3, wherein each of the emission pattern and the reception pattern presents a respective axis of revolution that coincides with the axis of rotation of the movable body.

5. A measurement method according to claim 3, wherein the emission pattern (10) lies in the proximity of a circumference of the first printed circuit (7), and wherein the reception pattern (15) lies in the proximity of a circumference of the second printed circuit (8).

6. A measurement method according to claim 3, wherein the emission pattern (24) lies at the center of the first printed circuit (20), and wherein the reception pattern (27) lies at the center of the second printed circuit (21) .

7. A measurement method according to claim 3, the measurement patterns (11; 25) being angularly distributed in regular manner in the proximity of a circumference of the first printed circuit, and the target pattern (16; 28) being positioned in the proximity of a circumference of the second printed circuit.

8. A measurement method according to any preceding claim, the measurement device also being arranged to measure the speed of the movable body.

9. A measurement method according to any preceding claim, wherein at least one pattern from among the emission pattern, the measurement patterns, the reception pattern, and the target pattern is a coil.

10. A measurement method according to any preceding claim, the movable body being a vehicle wheel (2) mounted on an axle (3) in order to rotate about an axis of rotation, the fixed portion being for securing to the axle and the movable portion being for being driven in rotation by the wheel.

11. A measurement method according to any preceding claim, the measurement device being integrated in a tachometer.

12. A measurement method according to claim 11, the tachometer being arranged to measure the speed of rotation of a wheel (2) of aircraft landing gear.

**Fig. 1**

**Fig. 2**

**Fig. 3**

Position angulaire du motif cible (°)

**Fig. 4**

**Fig. 5**

**Fig. 6**

**EP 3 769 046 B1**

**RÉFÉRENCES CITÉES DANS LA DESCRIPTION**

**Documents brevets cités dans la description**

- DE 102016202871 B3